# EUROPÄISCHE PATENTSCHRIFT

(11) **EP 2 587 330 B1**
(45) Veröffentlichungstag und Bekanntmachung des Hinweises auf die Patenterteilung: **31.07.2019**
(21) Anmeldenummer: 12006935.6
(22) Anmeldetag: 06.10.2012
(51) Int. Cl.: G05D 1/00, B60W 50/023, B60W 50/00

(54) **Steuereinrichtung zum wenigstens teilweise autonomen Betrieb eines Fahrzeugs und Fahrzeug mit solch einer Steuereinrichtung**
Control device for at least partially autonomous operation of a vehicle and vehicle with such a control device
Dispositif de commande pour le fonctionnement autonome -au moins en partie- d'un véhicule et véhicule équipé d'un tel dispositif de commande

(30) Priorität: 27.10.2011 DE 102011117116
(43) Veröffentlichungstag der Anmeldung: 01.05.2013
(73) Patentinhaber: Diehl Defence GmbH & Co. KG, 88662 ÜBERLINGEN (DE)
(72) Erfinder: Kopfstedt, Thomas, 88662 Überlingen (DE); Krogmann, Dirk, 78467 Konstanz (DE); Menges, Michael, 90461 Nürnberg (DE); Bullmer, Stefan, 90419 Nürnberg (DE)
(74) Vertreter: Diehl Patentabteilung

(56) Entgegenhaltungen:
- US-A1- 2003 076 221
- US-A1- 2005 040 709
- US-B1- 7 020 076

## Beschreibung

Die Erfindung betrifft eine Steuereinrichtung zum wenigstens teilweisen autonomen Betrieb eines Fahrzeugs, insbesondere eines militärischen Fahrzeugs, sowie ein Fahrzeug mit einer solchen Steuereinrichtung.

Aus der US 2003/076221 A1 ist eine Steuereinrichtung zum teilweise autonomen Betrieb eines Fahrzeugs bekannt, welche mehrere Recheneinheiten umfasst, die ein dezentrales System zur verteilten Ausführung miteinander kommunizierender Algorithmen bilden.

Aus der US 7 020 076 B1 ist eine fehlertolerante Systemarchitektur für Steuerungssysteme bekannt, bei der essentielle Komponenten redundant ausgeführt sind.

Im Bereich von Fahrzeugen, insbesondere von Landfahrzeugen, aber auch von See-und Luftfahrzeugen, ist es immer häufiger gewünscht, eine wenigstens teilweise autonome Steuerung des Kraftfahrzeugs zu erlauben, wobei bei gängigen, im Straßenverkehr genutzten Kraftfahrzeugen beispielsweise auf automatische Einparksysteme, Kollisionsschutzsysteme, Längsführungssysteme, Querführungssysteme und dergleichen verwiesen sei. Doch auch gerade im militärischen Bereich wird es immer häufiger gewünscht, Plattformen, also militärische Fahrzeuge, mit autonomen Fähigkeiten zu versehen. Dabei ist es heutzutage bekannt, dass autonome Fähigkeiten spezifisch für eine Plattform entwickelt und angepasst werden, so dass zwar einmalig der Realisierungsaufwand sinkt, die entwickelten Steuereinrichtungen jedoch lediglich für die bestimmte Plattform genutzt werden können. Die spezifischen Anforderungen eines bestimmten Fahrzeugs werden dabei der Auswahl der Sensoren und der Rechnerarchitektur zugrunde gelegt, so dass nach Fertigstellung der Projekte jeweils ein "gewachsenes System" spezifisch für eine Anwendung (bzw. eine Gruppe von angedachten Anwendungen) und eine spezifische Plattform, insbesondere also ein spezifisches Fahrzeug, entstanden ist. Dies führt wiederum dazu, dass autonome Fähigkeiten bisher kaum in militärischen Plattformen vorhanden sind, da mit dem bisherigen Ansatz der Integrationsaufwand und Zertifizierungsaufwand für die verschiedenen Plattformen nur mit sehr großem Mittelaufwand zu realisieren ist.

Bekannt in diesen Bereichen ist die Verwendung einer sogenannten Middleware, das bedeutet, eines Softwaresystems, das die Kommunikation zwischen verschiedenen Komponenten unterstützen soll. Dabei sind sowohl universell einsetzbare Middlewares wie auch spezifisch für Roboter ausgelegte Middlewares bekannt.

Wird eine solche Steuereinrichtung für militärische Fahrzeuge geschaffen, besteht meist auch das Problem, dass deren Robustheit nicht ausreichend ist. Gerade bei militärischen Fahrzeugen ist es wichtig, dass bei Schäden an Komponenten einer Steuereinrichtung dennoch zumindest eine kritische Grundfunktionalität erhalten bleibt, wozu bislang noch keine umfassenden Lösungen bekannt sind.

Der Erfindung liegt daher die Aufgabe zugrunde, eine Steuereinrichtung zum wenigstens teilweisen autonomen Betrieb eines Fahrzeugs, insbesondere eines militärischen Fahrzeugs, so auszugestalten, dass eine erhöhte Robustheit gegenüber Systemschäden gegeben ist und insbesondere die Steuereinrichtung auf unterschiedlichen Plattformen, das bedeutet in unterschiedlichen Fahrzeugen, eingesetzt werden kann.

Diese Aufgabe wird durch die Steuereinrichtung gemäß Anspruch 1 gelöst. Vorteilhafte Ausgestaltungen der Erfindung sind in den Unteransprüchen angegeben.

Der Begriff "Computerprogramme" im Sinne der vorliegenden Anmeldung ist breit zu interpretieren. Er umfasst generell alle Arten von Algorithmen, unabhängig davon, ob diese auf einem Computer, DSP, fPGA, IC, einem Microcontroller oder auf einer anderen Einheit ausführbar sind.

Grundlage der erfindungsgemäßen Steuereinrichtung ist es also, dass wenigstens zwei Recheneinheiten vorgesehen sind, die ein dezentrales System zur verteilten Ausführung miteinander kommunizierender Computerprogramme bilden. Solche dezentralen Systeme zur verteilten Ausführung eines Satzes von Computerprogrammen sind im Stand der Technik bereits grundsätzlich bekannt, wobei vorliegend wenigstens ein Teil der Computerprogramme zur Realisierung einer zu dem autonomen Betrieb beitragenden Funktion ausgebildet sind. Derartige Computerprogramme betreffen also die Algorithmen, die das Kernstück des autonomen Betriebs bilden. Mittels eines oder möglicherweise mehrerer zusammenwirkender Computerprogramme, die auch als Softwaremodule angesehen und bezeichnet werden können, werden also die Daten der Sensoren, die als zur Steuereinrichtung gehörig angesehen werden können, in entsprechende Steuerinformationen oder gar Steuerbefehle umgesetzt. Diese funktionsbezogenen Computerprogramme, die mithin eine Art Kern des Satzes von Computerprogrammen bilden, weisen mit besonderem Vorteil eine festgelegte Datenschnittstelle auf, wobei andere Computerprogramme vorgesehen sein können, die die Daten der Sensoren in der Datenschnittstelle entsprechende Daten umwandeln, so dass diese Modularität letztlich auch dafür sorgt, dass die funktionsbezogenen Computerprogramme mit verschiedenen anderen Computerprogrammen gemeinsam genutzt werden können und nicht spezifisch für ein Fahrzeug ausgelegt sind, sondern auf verschiedenen Plattformen eingesetzt werden können. Die funktionsbezogenen Computerprogramme können also plattformunabhängig realisiert werden, was mit besonderem Vorteil für alle Computerprogramme realisiert werden kann, worauf im Folgenden noch näher eingegangen werden soll.

Nachdem es bei der vorliegenden Erfindung um eine verteilte Ausführung der Computerprogramme geht, ist mit besonderem Vorteil jede Recheneinheit zur Durchführung jedes Programmmittels ausgebildet, so dass auch bei Ausfall einer Recheneinheit sicher gestellt ist, dass jedes Computerprogramm ausgeführt werden kann, nachdem der Satz von Computerprogrammen zudem auf jeder Recheneinheit oder zumindest von jeder Recheneinheit zugreifbar vorliegt. Dabei sei an dieser Stelle noch angemerkt, dass es sich bei den Recheneinheiten um übliche Rechner handeln kann, jedoch auch eine Recheneinheit beispielsweise durch einen digitalen Signalprozessor (DSP) realisiert werden kann und dergleichen.

Um die verteilte Ausführung der Computerprogramme auf den Recheneinrichtungen zu ermöglichen, müssen die Recheneinrichtungen in der Lage sein, miteinander zu kommunizieren. Mithin ist das erste Kommunikationsnetzwerk vorgesehen, welches eine Kommunikation der Recheneinheiten untereinander erlaubt, wobei die Kommunikation der verschiedenen Computerprogramme (Softwaremodule) über eine Middleware realisiert sein kann. Zudem muss aber auch, um diesen Aspekt der Robustheit abgreifen zu können, jede Rechnereinheit in der Lage sein, auf die Daten der Sensoren zuzugreifen, wozu das wenigstens eine zweite kabelgebundene Kommunikationsnetzwerk vorgesehen ist. Die Sensoren geben ihre gegebenenfalls aufbereiteten oder konvertierten Messdaten mithin auf das zweite Kommunikationsnetzwerk, wo sie von den Recheneinheiten, auf denen gerade die Sensordaten benötigende Computerprogramme ausgeführt werden, entsprechend empfangen werden können. Hierzu kann mit besonderem Vorteil vorgesehen sein, dass an das zweite Kommunikationsnetzwerk angeschlossene Sensoren eine Signalwandlereinrichtung zur Umwandlung gemessener Sensordaten in über das Kommunikationsnetzwerk übertragbare Sensordaten umfassen. Im Vergleich zu bekannten Systemen ist bei der erfindungsgemäßen Steuereinrichtung also vorgesehen, dass die Sensoren, insbesondere alle Sensoren, mit Schnittstellen - der Signalwandlereinrichtung - ausgestattet werden, welche es ermöglichen, die Kommunikation mit mehreren Recheneinheiten parallel oder auch sequentiell aufzubauen, und zu halten. Die Sensordaten können also mittels der Signalwandlereinrichtung parallel bzw. sequentiell an verschiedene Recheneinheiten verteilt werden, so dass bei Ausfall einer Recheneinheit die Funktionalität durch eine andere Recheneinheit übernommen werden kann. Dies wird durch das zweite Kommunikationsnetzwerk realisiert, während das erste Kommunikationsnetzwerk dafür sorgt, dass die Recheneinheiten untereinander in der Lage sind, zu kommunizieren, so dass beispielsweise festgestellt werden kann, ob eine Recheneinheit defekt ist und/oder wo noch Rechenkapazitäten frei sind.

Mit besonderem Vorteil ist es nun bei der vorliegenden Erfindung möglich, nachdem ja eine Netzwerkarchitektur der Kommunikation vorliegt, die Kommunikation zwischen den Recheneinheiten alternativ über ein anderes Kommunikationsnetzwerk, also ein zweites Kommunikationsnetzwerk, zu realisieren, um so die Robustheit des Systems gegen beliebige Komponentendefekte zu erhöhen. Betrifft das zweite Kommunikationsnetzwerk hauptsächlich oder ausschließlich den Transport der Sensorrohdaten, so kann dieses auch als ein Sensorrohdatennetzwerk bzw. Sensorrohdatenbus bezeichnet werden. Ist also beispielsweise eine Datenübertragung über das erste Kommunikationsnetzwerk, welches auch als Middleware-Netzwerk bezeichnet werden kann, nicht oder nur unzureichend möglich, so wird auf die Verwendung wenigstens eines zweiten Kommunikationsnetzwerks umgeschaltet, so dass zumindest die Grundfunktionalitäten der Steuereinrichtung weiter aufrechterhalten werden können.

In vorteilhafter Ausgestaltung der vorliegenden Erfindung kann wenigstens ein Kommunikationsnetzwerk als ein sternförmiges Netzwerk, insbesondere ein Ethernet-Netzwerk und/oder wenigstens ein Kommunikationsnetzwerk als ein BUS-Netzwerk ausgebildet sein. Beispielsweise ist es möglich, sowohl das erste als auch das zweite Kommunikationsnetzwerk als Ethernet-Netzwerke auszubilden, wobei auch andere Netzwerke, beispielsweise ein CAN-BUS, grundsätzlich denkbar sind.

Dabei sei in diesem Zusammenhang noch darauf hingewiesen, dass als Sensoren sowohl aktive wie auch passive Sensoren vorgesehen sein können, wobei rein beispielsweise Positionssensoren, insbesondere GPS-Sensoren, Odometer, Laserscanner, Tagsicht-Kameras, IR-Kameras, 3D-Kameras, Radarsensoren und/oder Ultraschallsensoren genannt seien. Als autonome Fähigkeiten bzw. Funktionen eines mit der erfindungsgemäßen Steuereinrichtung ausgestatteten Fahrzeugs kann beispielsweise ein autonomes Folgen, eine Teleoperation, eine Wegpunktnavigation und dergleichen vorgesehen werden. Diese Funktionen erfordern üblicherweise weitere Funktionen, die die Auswertung der die Umgebung betreffenden Sensordaten bzw. deren Aufbereitung betreffen, beispielsweise Funktionen der Selbstlokalisation, der Hinderniserkennung und dergleichen. Auch Fahrerassistenzfunktionen können einen wenigstens teilweise autonomen Betrieb des Fahrzeugs umfassen und mit der erfindungsgemäßen Steuereinrichtung realisiert werden. Dabei sei an dieser Stelle nochmals darauf hingewiesen, dass die Realisierung von autonomen Fähigkeiten und Funktionen im Stand der Technik bezüglich der Algorithmik, der Auswertung von Sensordaten und dergleichen bereits bekannt ist und hier nicht näher dargelegt werden soll. In der vorliegenden Erfindung geht es um die Bereitstellung einer Steuereinrichtung, die für den Einsatz im Militärbereich besonders robust ausgestaltet sein soll und idealer Weise auch auf unterschiedlichen Fahrzeugen bzw. Plattformen einsetzbar sein soll.

Zur Umsetzung der durch die Computerprogramme ermittelten Steuerinformationen, welche auch bereits Steuerbefehle umfassen können, sind im Prinzip zwei grundsätzliche Möglichkeiten denkbar, wobei es bevorzugt wird, wenn die Steuereinrichtung wenigstens einen Steueranschluss an ein Drive-By-Wire-System des Fahrzeugs umfasst, wobei idealerweise jede Rechnereinrichtung Zugriff auf den oder wenigstens einen Steueranschluss hat. In dieser Ausgestaltung ist mithin das Fahrzeug bereits grundsätzlich Drive-By-Wire-fähig, es liegt also ein Drive-By-Wire-System vor, auf welches aufgesetzt werden kann. In diesem Fall liefert die Steuereinrichtung als Steuerinformationen sogenannte "High-Level-Commands", welche noch in "Low-Level-Commands" durch das Drive-By-Wire-System umgewandelt werden müssen. Gerade im Hinblick darauf, dass die vorliegende Erfindung auch darauf abzielt, eine Steuereinrichtung bereitzustellen, die nachrüstbar sein soll, mithin bereits vorhandenen Fahrzeugen autonome Fähigkeiten hinzufügen soll, ist es vorteilhaft, wenn das entsprechende Fahrzeug bereits grundsätzlich ein Drive-By-Wire-System aufweist, an das die Steuereinrichtung dann letztlich als eine Art "Nachrüstsatz" nachträglich angekoppelt werden kann, um Kraftfahrzeuge verschiedener Typen und Arten mit autonomen Fähigkeiten zu versehen.

Es ist selbstverständlich alternativ auch denkbar, dass über das und/oder ein zweites Kommunikationsnetzwerk auch Rahmen der autonomen Funktionen genutzte Aktuatoren des Fahrzeugs, beispielsweise Motoren, Manipulatorarme und dergleichen, mehr oder weniger unmittelbar oder wiederum über eine den Aktuatoren zugeordnete Schnittstelle angesteuert werden. Es sei darauf hingewiesen, dass es auch in diesem Fall denkbar ist, eine Nachrüstbarkeit zu realisieren, indem beispielsweise dedizierte bzw. konfigurierbare Computerprogramme vorgesehen sind, die die über entsprechende Schnittstellen standardisierten und über das oder ein zweites Kommunikationsnetzwerk übertragenen Steuerbefehle konkret für verschiedene Ausgestaltungen von Aktuatoren umsetzen können. Nichts desto trotz wird es bevorzugt, auf ein bereits vorhandenen Drive-By-Wire-System aufzusetzen.

Es sei an dieser Stelle schließlich noch darauf hingewiesen, dass es erfindungsgemäß bevorzugt ist, Sensoren redundant vorzusehen und/oder zumindest mehrere Sensoren, die im Informationsgehalt vergleichbare Daten liefern, vorzusehen. Auf diese Art und Weise kann auch bei Ausfall eines Sensors ein anderer Sensor weiter verwertet werden, so dass die Robustheit gegen Ausfälle weiter erhöht wird. Somit kann im Falle eines Sensorausfalls zumindest bis zu einer bestimmten Grenze der Funktionsumfang gewährleistet werden.

Zusammenfassend ist bei der vorliegenden Erfindung also ein dezentrales System von Rechnereinheiten vorgesehen, die einen Satz von Computerprogrammen ausführen können. Damit ist es möglich, die Computerprogramme unter den vorhandenen Recheneinheiten auch dynamisch aufzuteilen. Fällt eine oder fallen mehrere Recheneinheiten aus, so sinkt nur die verfügbare Rechenleistung, während kritische Funktionen weiterhin aufrecht erhalten werden können. Jede Recheneinheit ist dabei gleichberechtigt an das erste Kommunikationsnetzwerk angeschlossen, welches beispielsweise als ein Middleware-Ethernet ausgebildet sein kann. Ebenso gleichberechtigt ist jede Recheneinheit an das zweite Kommunikationsnetzwerk bzw. die zweiten Kommunikationsnetzwerke, welche auch als Sensordaten-Netzwerke bezeichnet werden können, angeschlossen. Fällt das erste Kommunikationsnetzwerk, insbesondere das Middleware-Netzwerk, komplett aus, kann ein Notbetrieb der Kommunikation über das zweite Kommunikationsnetzwerk erfolgen.

In Weiterbildung der vorliegenden Erfindung kann vorgesehen sein, dass die Steuereinrichtung bei einer Kommunikation zwischen Recheneinheiten über das zweite Kommunikationsnetzwerk zu einer Priorisierung von Kommunikationspartnern und/oder Nachrichten zur Reduzierung des Datenaufkommens ausgebildet ist. Wenn der Datenaustausch zwischen den Recheneinheiten statt über das erste Kommunikationsnetzwerk mit über das zweite Kommunikationsnetzwerk durchgeführt wird, ist gegebenenfalls dessen Belastungsgrenze überschritten, so dass für diesen Fall vorgesehen sein kann, bestimmte Nachrichten und/oder Kommunikationspartner zu priorisieren, um insbesondere wichtige kritische Funktionen weiterhin aufrecht zu erhalten, während weniger wichtige, beispielsweise redundant vorgesehene Funktionalitäten, bezüglich der Kommunikation gezielt benachteiligt oder gar gänzlich ausgeschlossen werden können. Eine derartige Priorisierung kann beispielsweise über eine entsprechend vorhandene Konfigurationsdatei erfolgen.

Zweckmäßigerweise kann ferner vorgesehen sein, dass wenigstens zwei zweite Kommunikationsnetzwerke vorgesehen sind. Das zweite Kommunikationsnetzwerk kann mithin entweder gänzlich redundant ausgeführt werden oder für Teilgruppen der Sensoren aufgeteilt werden, wobei eine gänzlich redundante Ausführung erfindungsgemäß bevorzugt wird. Auf diese Weise ist auch bei Ausfall eines zweiten Kommunikationsnetzwerkes sichergestellt, dass die Daten aller angeschlossenen Sensoren die Recheneinheiten erreichen und mithin die erfolgreiche Ausführung wenigstens der kritischen Computerprogramme sichergestellt ist Dabei sei darauf hingewiesen, dass es selbstverständlich dann auch denkbar ist, bei Ausfall des ersten Kommunikationsnetzwerks oder Überlastung desselben beide zweiten Kommunikationsnetzwerke für die Kommunikation der Recheneinheiten untereinander mitzunutzen. Sind mehrere zweite Kommunikationsnetzwerke als redundante Netzwerke, an die alle Sensoren angeschlossen sind, vorgesehen, ist es besonders vorteilhaft, worauf im Folgenden noch näher eingegangen werden wird, die Verkabelung dieser Netzwerke so zu führen, dass sie räumlich getrennt verläuft, so das beispielsweise in der militärischen Anwendung eine Zerstörung einer Verbindung eines der zweiten Kommunikationsnetzwerke das oder die weiteren zweiten Kommunikationsnetzwerke unangetastet und weiterhin funktionsfähig lässt.

Wie bereits erwähnt, ist vorteilhafterweise jede Recheneinheit zur Durchführung jedes Computerprogramms des Satzes von Computerprogrammen ausgebildet. Das bedeutet, jede Recheneinheit hat Zugriff auf alle Computerprogramme und kann diese auch durchführen, so dass ein Ausfall einer oder mehrerer Recheneinheiten entsprechend dadurch kompensiert werden kann, dass insbesondere kritische Computerprogramme auf anderen Recheneinheiten durchgeführt werden. In weiterer Ausgestaltung der vorliegenden Erfindung kann hierbei vorgesehen sein, dass die Recheneinheiten bei einer Nichtdurchführbarkeit einer insbesondere als Konfigurationsdatei vorliegenden Standardverteilung von durchzuführenden Computerprogrammen auf Recheneinheiten, insbesondere aufgrund eines Ausfalls wenigstens einer Recheneinheit, zur Neuzuordnung wenigstens eines insbesondere anhand einer Prioritätenliste ausgewählten Teils der durchzuführenden Computerprogramme zur Recheneinheiten ausgebildet sind. Es ist also eine Startverteilung von Computerprogrammen auf die Recheneinheiten denkbar, wobei bei Störungen ein entsprechendes "Umschalten", also eine dynamische Anpassung dieser Verteilung, ermöglicht wird, welche beispielsweise - da ja üblicherweise auch die Gesamtrechenleistung verringert ist - unter Berücksichtigung einer Prioritätenliste erfolgen kann.

Um dies konkret auszuführen, ist es erfindungsgemäß vorgesehen, dass jede Recheneinheit zum Ausführen eines Masterprogramms zur Koordinierung der Ausführung der Computerprogramme nach dem Booten ausgebildet ist (unter "Masterprogramm" im Sinne der vorliegenden Anmeldung wird ganz allgemein ein Masteralgorithmus verstanden). Die Masterprogramme können dann entsprechend miteinander kommunizieren, um aktuelle Auslastungen, Ausfälle und dergleichen mitzuteilen, zu erkennen und entsprechend darauf zu reagieren. Ist eine Konfigurationsdatei vorhanden, die eine Startverteilung von Computerprogrammen auf Recheneinheiten und/oder Maßnahmen bei einem Ausfall von Ressourcen bereits enthält, ist es erfindungsgemäß vorgesehen, dass das Masterprogramm Informationen zur Ausführung der Computerprogramme aus wenigstens einer auf jeder Recheneinheit vorliegenden Konfigurationsdatei ausliest. Gleichzeitig oder alternativ ist es vorgesehen, dass das Masterprogramm Informationen zur Ausführung der Computerprogramme von wenigstens einem anderen Masterprogramm, insbesondere über die Middleware erhält. Diese Informationen können auch die bereits erwähnte Prioritätenliste umfassen, die die Verteilung (und gegebenenfalls das Deaktivieren von Funktionen/Computerprogrammen) bei Ausfällen zu regeln sucht.

Es ist also vorgesehen, dass nach dem Booten auf jeder Recheneinheit ein Masterprogramm ausgeführt wird, welches aus einer oder mehreren Konfigurationsdateien Informationen ausliest. Dabei kann vorgesehen sein, dass in der in einer Speichereinrichtung der Recheneinheiten abgelegten Konfigurationsdatei, welche vorteilhaft als XML-Datei ausgebildet sein kann, Informationen über das Fahrzeug und/oder die Recheneinheiten und/oder die angeschlossenen Sensoren enthalten sind, so dass das Masterprogramm auch Informationen über die Plattformeigenschaften, die geforderten Computerprogramme bzw. Software-Algorithmen und die vorhandenen Sensoren erhält. Danach findet eine Abstimmung mit den anderen Recheneinheiten durch Kommunikation der Masterprogramme über das erste Kommunikationsnetzwerk statt. Sofern alle Recheneinheiten wie geplant vorhanden und einsatzbereit sind, werden die Computerprogramme wie in der Konfigurationsdatei angegeben auf die verschiedenen Recheneinheiten verteilt (Standardverteilung). Anderenfalls findet ein Abstimmungsprozess zwischen allen vorhandenen Recheneinheiten statt, um gegebenenfalls fehlende Softwarefunktionalitäten in Form von Computerprogrammen auf die verbliebenen Recheneinheiten zu verteilen.

Wie bereits dargelegt wurde, setzt sich die Software, also der gesamte Satz von Computerprogrammen, aus diversen einzelnen Modulen zusammen, welche alle als eigenständige Computerprogramme existieren. Auch diese Computerprogramme können bei jeweiligem Start entweder durch Datenabruf, insbesondere via Middleware, oder aber über eine Konfigurationsdatei, insbesondere XML-Dateien, die notwendigen Informationen erhalten, um die entsprechende Plattform des speziellen Fahrzeugs, auf der die Steuereinrichtung eingesetzt wird, richtig zu nutzen. Wie bereits erwähnt, können in diesen Konfigurationsdateien Informationen über die verfügbaren Sensoren der Plattform (Typ, Kommunikationsschnittstelle, Einbauposition, etc.), die vorhandenen Kommunikationsverbindungen, insbesondere zum Drive-By-Wire-System, vorhandene Kommunikationsverbindungen zu anderen Fahrzeugen und Informationen über die Plattform (das Fahrzeug) selbst, beispielsweise Kommunikationsschnittstellen, verfügbare Plattformdaten, Latenzen, Abmessungen der Plattform, dynamische und statische Grenzen der Plattform und dergleichen abgelegt sein. Zusätzlich kann, wie bereits dargelegt, zu Beginn auf jeder Recheneinheit noch das Masterprogramm als lokaler, zentraler Algorithmus (beispielsweise als zentraler Software-Baustein) gestartet werden, welches die Computerprogramme auf der jeweiligen Recheneinheit überwacht und konfiguriert. Das Masterprogramm kommuniziert mit den anderen Recheneinheiten und stimmt mit diesen ab, auf welchem. Rechner welches Computerprogramm der Steuereinrichtung läuft, um beispielsweise auch eine gleichmäßige Auslastung der Recheneinheiten, insbesondere der CPUs, zu gewährleisten und in jedem Fall auf eventuelle Hardware-Ausfälle direkt reagieren zu können.

In diesem Zusammenhang kann vorgesehen sein, dass die oder eine Konfigurationsdatei Informationen zu einer Fehlerfallbehandlung, insbesondere dem Ausfall einer Recheneinheit und/oder eines Sensors und/oder eines Kommunikationsnetzwerks, umfasst, wobei durch Abstimmung (Kommunikation) der Masterprogramme bei einem Fehlerfall eine Umkonfiguration der Abarbeitung der Computerprogramme vorgenommen werden kann. Auch das Abschalten einzelner Computerprogramme ist denkbar, beispielsweise, wenn diese nicht genügend priorisiert sind.

Zusätzlich kann sich das Masterprogramm einer Watchdog-Funktionalität bedienen und die ausgeführten Computerprogramme hinsichtlich des Verhaltens überwachen, um diese gegebenenfalls abzuschalten, neu zu starten oder mit anderen Parametern, beispielsweise mit niedrigerer Updaterate, auszuführen. Dabei sei in diesem Zusammenhang nochmals darauf hingewiesen, dass auch Funktionen parallel betrieben werden können, welche über ähnliche Eigenschaften verfügen und jeweils über eine identische Datenschnittstelle Informationen liefern. Dies steigert weiterhin die Robustheit, da man beispielsweise durch zwei parallel arbeitende Selbstlokalisationscomputerprogramme, welche unterschiedliche Sensoren für die Positionsbestimmung verwenden, gegen plötzliche Störungen in einem der Sensoren gefeit ist, wobei zudem durch vergleichende Bewertung der Daten der unterschiedlichen Computerprogramme die Qualität der Information erhöht werden kann. Dies ermöglicht es den Computerprogrammen, welche von diesen Informationen abhängen bzw. auf diesen Informationen aufbauen, stets Daten von möglichst hoher Qualität zur Verfügung gestellt zu bekommen. Unregelmäßigkeiten können schnell erkannt werden, so dass beispielsweise eine Bedienperson gewarnt werden kann oder die Steuereinrichtung und/oder das Fahrzeug in einen sicheren Betriebszustand versetzt werden kann.

Wie bereits erwähnt, erlaubt die dargestellte Modularität der Software, also des Satzes von Computerprogrammen, es, auch die Software im Hinblick auf Nachrüstungen verschiedener Fahrzeuge weitgehend plattformunabhängig zu gestalten. Wie bereits erwähnt, kann vorgesehen sein, dass wenigstens ein Teil der Computerprogramme eine festgelegte Datenschnittstelle aufweist. Ferner kann vorgesehen sein, dass wenigstens ein Computerprogramm zur Umwandlung von Daten eines bestimmten Sensors in ein für die festgelegte Datenschnittstelle geeignetes Format vorgesehen ist. Mithin sind die einzelnen Softwarefunktionalitäten so ausgelegt, dass sie festgelegte Datenformate zum Datenaustausch verwenden. Auf diese Weise können beispielsweise nachträglich Sensoren in das Gesamtsystem bzw. die Steuereinrichtung integriert werden, indem für diese Sensoren ein spezifisches Softwaremodul zum Auslesen der Sensordaten erstellt wird und diese Sensordaten dann im Standardformat den anderen Computerprogrammen mitgeteilt werden. Dies gibt der Steuereinrichtung eine Upgrade-Fähigkeit.

Diese Upgrade-Fähigkeit zeigt sich jedoch auch in der Möglichkeit, einzelne Computerprogramme auszutauschen bzw. neue Computerprogramme hinzuzufügen, ohne dass Anpassungen bei den anderen Softwareanteilen, also den anderen Computerprogrammen, notwendig sind. So sind beispielsweise im Fall von Softwareupdates einfach die neuen Computerprogramme auf die Recheneinheiten zu kopieren und gegebenenfalls in den Konfigurationsdateien bekannt zu machen. Danach ist die bestehende Steuereinrichtung automatisch in der Lage, die neuen Computerprogramme zu nutzen, sofern diese die bestehende Datenschnittstelle nutzen können.

Dies ermöglicht eine sehr einfache Erweiterung der bestehenden Software bzw. des bestehendes Satzes von Computerprogrammen und erlaubt außerdem die einfache Integration von Komponenten von Drittanbietern.

Erfindungsgemäß ist es vorgesehen, dass die Recheneinheiten wenigstens eine, insbesondere wenigstens zwei, selbst bootfähige Master-Recheneinheiten und wenigstens eine über ein Kommunikationsnetzwerk mittels einer gebooteten Master-Recheneinheit bootfähige Slave-Recheneinheit umfassen. Die Master-Recheneinheiten sind mithin dazu ausgebildet, selbst zu booten, beispielsweise indem sie mit einem entsprechenden Speichermedium, insbesondere einer Festplatte, versehen sind. Dabei wird bei Ausfall einer zum Booten genutzten Speichereinrichtung eine Master-Recheneinheit automatisch zu einer Slave-Recheneinheit, das bedeutet, sollte der Bootvorgang einer Master-Recheneinheit fehlschlagen, so verhält sich diese wie eine Slave-Recheneinheit. Die Slave-Recheneinheiten, die beispielsweise keine eigene Speichereinrichtung haben, können über das erste Kommunikationsnetzwerk booten und erhalten von einer gebooteten Recheneinheit ein Betriebssystem und/oder den gesamten Satz von Computerprogrammen zugeteilt. Vorzugsweise werden als Speichereinrichtungen Solid State Disks (SSDs) verwendet.

In einer weiteren vorteilhaften Ausgestaltung der erfindungsgemäßen Steuereinrichtung sind wenigstens zwei Stromversorgungen für die Recheneinheiten vorgesehen, wobei insbesondere bei wenigstens zwei Master-Recheneinheiten wenigstens zwei unterschiedlichen Master-Recheneinheiten unterschiedliche Stromversorgungen zugeordnet sind. Auch bezüglich der Stromversorgung kann mithin eine höhere Robustheit des Gesamtsystems erreicht werden, indem mehrere Stromversorgungen vorgesehen werden, die verschiedenen Recheneinheiten zugeordnet sein können, wobei auch eine Ausführung denkbar ist, wonach mehrere Stromversorgungen für dieselben Recheneinheiten vorgesehen sind, um den Ausfallschutz hier noch mehr zu erhöhen. Unter Stromversorgungen sind vorliegend auch Spannungswandlungseinrichtungen zu verstehen, die neben den Recheneinheiten auch für die Sensoren vorgesehen werden können. Die Stromversorgungen sind vorteilhaft innerhalb des Fahrzeugs verteilt angeordnet, so dass bei Beschädigung eines Geräts wenige oder keine weiteren Funktionseinschränkungen auftreten können, nachdem bei den Recheneinheiten (und gegebenenfalls bei den Sensoren) dann eine andere Stromversorgung, beispielsweise eine andere Spannungswandlungseinrichtung, die Stromversorgung übernehmen kann.

In weiterer Ausgestaltung der vorliegenden Erfindung kann vorgesehen sein, dass wenigstens zwei Baueinheiten mit wenigstens einer Recheneinheit, insbesondere wenigstens einer Master-Recheneinheit, vorgesehen sind, welche insbesondere voneinander beabstandet, bevorzugt um wenigstens 50 cm beabstandet, in dem Fahrzeug angeordnet sind. Es wird mithin vorgeschlagen, die Recheneinheiten im Fahrzeug bzw. der Plattform räumlich getrennt anzuordnen, um beispielsweise zu gewährleisten, dass durch Beschuss nicht sämtliche Recheneinheiten ausfallen können. Dabei enthält jede Baueinheit vorteilhafterweise wenigstens eine Master-Recheneinheit, wenn Master-Recheneinheiten vorgesehen sind. So sind die einzelnen Baueinheiten in jedem Fall für sich arbeitsfähig.

Beispielsweise kann vorgesehen sein, dass eine Baueinheit zwei Master-Recheneinheiten und zwei Slave-Recheneinheiten sowie zwei eingebaute Stromversorgungen umfasst, wobei je eine Stromversorgung je einer Master-Recheneinheit oder einer Slave-Recheneinheit zugeordnet ist. Eine Baueinheit kann ein Gehäuse, insbesondere ein einen öffenbaren Deckel aufweisendes Gehäuse, aufweisen, beispielsweise ein Aluminiumgehäuse. Ferner kann vorgesehen sein, dass das Gehäuse der Baueinheit eine Wandstärke aufweist, die größer als 5 mm, insbesondere 6 mm, beträgt. Auf diese Weise kann das Gehäuse selbst rauen Umgebungen und Belastungen widerstehen und somit die Recheneinheiten vor Beschädigungen schützen. Der bereits erwähnte abnehmbare Deckel ermöglicht es, leicht Zugang zu den Recheneinheiten, beispielsweise zur Wartung, zu erhalten.

Es kann ferner vorgesehen sein, dass einer Baueinheit mit mehreren Recheneinrichtungen gemeinsame Anschlüsse für das erste und das zweite Kommunikationsnetzwerk zugeordnet sind und/oder die Baueinheit wenigstens einen Anschluss für eine weitere Kommunikationsverbindung, insbesondere mit einem Sensor, aufweist. Beispielsweise können zusätzlich zwei Anschlüsse für einen CAN-BUS und vier RS232-Schnittstellen vorgesehen sein. So können auch weitere Geräte angeschlossen werden. Denkbar ist es bezüglich der Kommunikationsnetzwerke selbstverständlich auch, dass jede Recheneinheit einzeln an die Kommunikationsnetzwerke angeschlossen ist, was gegebenenfalls eine weitere Verbesserung der Robustheit ermöglichen kann.

Vorzugsweise kann ferner vorgesehen sein, dass die Verkabelung unterschiedlicher Kommunikationsnetzwerke voneinander beabstandet, insbesondere in unterschiedlichen Kabelkanälen und/oder auf unterschiedlichen Verkabelungswegen, durch das Fahrzeug geführt ist. Auch bei der Verkabelung kann mithin darauf geachtet werden, dass diese so im Fahrzeug verlegt wird, dass sie dem dezentralen Aufbau gerecht wird und mithin keinen zentralen Knoten bildet, welcher im Falle einer Beschädigung das gesamte System, mithin die gesamte Steuereinrichtung, lahm legen könnte. Hierzu können getrennte Kabelkanäle und/oder gänzlich andere Führungswege für die Kabel vorgesehen werden. Ist beispielsweise ein Sensor über zwei zweite Kommunikationsnetzwerke mit Recheneinheiten verbunden, so kann für jedes der zwei Kommunikationsnetzwerke ein anderer Weg, beispielsweise an unterschiedlichen Seiten des Kraftfahrzeugs entlang, gewählt werden. Dabei sei an dieser Stelle noch darauf hingewiesen, dass auch die Steckverbindungen vorteilhafter Weise besonders robust ausgelegt werden können, insbesondere insgesamt nur über MIL-Stecker realisiert werden können. Dabei handelt es sich um Stecker bzw. Steckverbinder, die nach einer MIL-Norm, also einem militärischen Standard, ausgeführt sind.

Vorzugsweise sind alle verwendeten Recheneinheiten identisch. Dies macht es besonders einfach, Entscheidungsprozesse, welche Recheneinheit, beispielsweise bei dynamischer Verteilung, welches Computerprogramm ausführen soll, zu gestalten, nachdem die Recheneinheiten alle grundsätzlich gleiche Fähigkeiten aufweisen. Sind alle Recheneinheiten gleich ausgestaltet, kann jede Recheneinheit die Aufgabe jeder anderen Recheneinheit übernehmen, wenn eine oder mehrere Recheneinheiten ausfallen. Zwar ist es grundsätzlich auch denkbar, unterschiedliche Recheneinheiten zu verwenden, dies würde allerdings den Aufwand bei der geeigneten Verteilung der Funktionalitäten im Falle eines Hardware-Ausfalls erhöhen.

Wie bereits erwähnt, kann zur Kommunikation der Computerprogramme eine Middleware vorgesehen werden, wobei gängige, im Handel erhältliche Middlewares genauso einsetzbar sind wie proprietäre Middleware-Umgebungen.

Neben der Steuereinrichtung betrifft die vorliegende Erfindung auch ein Fahrzeug, insbesondere ein militärisches Fahrzeug, welches eine Steuereinrichtung nach einem der vorangehenden Ansprüche umfasst. Dabei kann ein solches Fahrzeug vorzugsweise ein Drive-By-Wire-System umfassen, auf das die vorliegende Steuereinrichtung aufsetzen kann. Sämtliche Ausführungen bezüglich der erfindungsgemäßen Steuereinrichtung lassen sich analog auf das erfindungsgemäße Fahrzeug übertragen, so dass auch mit diesem die genannten Vorteile erreicht werden können.

Insgesamt ermöglicht es die vorliegende Erfindung also, eine Steuereinrichtung bereitzustellen, die es erlaubt, beliebige Plattformen, letztlich also beliebige Fahrzeuge unterschiedlichen Typs, mit einem generellen Fähigkeitsset an autonomen Funktionen auszurüsten, wobei die Steuereinrichtung äußerst robust gegenüber Beschädigungen ist und die Ausstattung mit autonomen Funktionen mit einer maximalen Flexibilität gegenüber der eingesetzten Sensorik, Plattform und der Hardwarekomponenten erlaubt. Außerdem erlaubt es die Steuereinrichtung mit besonderem Vorteil, zu einem späteren Zeitpunkt Einzelkomponenten, sei es Computerprogramme oder Hardwarekomponenten, insbesondere also Sensoren und dergleichen, auszutauschen oder solche hinzuzufügen, ohne eine Anpassung der bestehenden anderen Komponenten vornehmen zu müssen. Die erfindungsgemäße Steuereinrichtung kann also auch als eine Art "Intelligenz-Kit" bezeichnet werden, welches sich insbesondere für den Einsatz im militärischen Bereich eignet.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Fahrzeugs,
- Fig. 2: eine Prinzipskizze einer erfindungsgemäßen Steuereinrichtung,
- Fig. 3: eine Prinzipskizze einer Baueinheit der Steuereinrichtung nach Fig. 2,
- Fig. 4: eine Seitenansicht einer Baueinheit, und
- Fig. 5: eine Prinzipskizze zur Softwarearchitektur.

Vorab sei angemerkt, dass das hier dargestellte Ausführungsbeispiel der erfindungsgemäßen Steuereinrichtung letztlich einen plattformunabhängigen Rüstsatz zur Ausstattung mit autonomen Fähigkeiten darstellt, der mithin nicht auf die Anwendung in dem hier dargestellten militärischen Fahrzeug beschränkt ist, sondern in unterschiedlichen Modellen und Typen eingesetzt werden kann. Die Steuereinrichtung ist einfach zu integrieren und zu warten, wobei zudem zwischen manuellen und autonomen Modi umgeschaltet werden kann. Dabei ist die vorliegend beschriebene Steuereinrichtung insbesondere zum Aufsetzen auf ein bereits vorhandenes Drive-By-Wire-System, das die Plattform des auszustattenden Fahrzeugs aufweist, ausgebildet.

Zur Konfiguration auf ein spezielles System nutzt die erfindungsgemäße Steuereinrichtung, was im Folgenden noch näher dargelegt werden soll, wenigstens eine Konfigurationsdatei, die insbesondere die Größe und den Typ der Plattform, die Art und die Einbauposition von Sensoren, das verbaute Drive-By-Wire-System und dergleichen über Parameterdatensätze spezifiziert, so dass die tatsächliche Funktion der Steuereinrichtung angepasst werden kann.

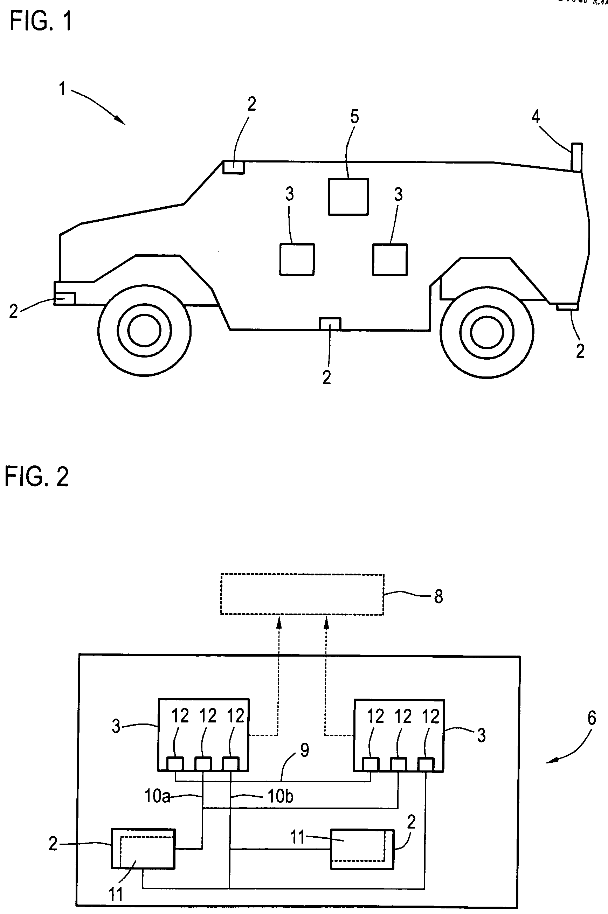

Fig. 1 zeigt ein erfindungsgemäßes Fahrzeug 1, hier ein Allschutz-Transport-Fahrzeug (ATF), in dem eine erfindungsgemäße Steuereinrichtung verbaut ist. Dabei sind Fig. 1 insbesondere die Verbaupositionen diverser Komponenten zu entnehmen, hier von verschiedenen Sensoren 2 und von Baueinheiten 3, die Recheneinheiten der Steuereinrichtung enthalten. Ferner gezeigt ist eine Kommunikationseinrichtung 4, die bezüglich der vorliegenden Erfindung auch als ein Sensor aufgefasst werden kann. Das Fahrzeug 1 besitzt eine zentrale Energiequelle 5, wobei jedoch auch weitere Energiequellen vorgesehen sein können. Wie bereits aus Fig. 1 ersichtlich ist, sind nicht nur die Sensoren 2 verteilt angeordnet, sondern auch die beiden Baueinheiten 3 sind räumlich beabstandet verbaut, so dass bei einem beispielsweise auftretenden Waffentreffer nur eine der Baueinheiten 3 beschädigt wird. Selbstverständlich können auch mehr als zwei Baueinheiten 3 vorgesehen werden.

Die Sensoren 2 können beispielsweise GPS-Sensoren, Odometer, Laserscanner, verschiedene Arten von Kameras, Radarsensoren und/oder Ultraschallsensoren umfassen. Sie sind in der vorliegenden Ausführungsform entweder redundant vorgesehen oder wenigstens derart, dass äquivalente, das bedeutet, jeweils zur Versorgung bestimmter Funktionen nutzbare Sensoren vorliegen, beispielsweise mehrere Sensoren, die Daten liefern, die für eine Selbstlokalisierungsfunktion nützlich sind.

Die Steuereinrichtung, die im Hinblick auf die weiteren Figuren genauer beschrieben wird, bietet dabei, wie beschrieben, die Möglichkeit, verschiedene autonome und teilautonome Funktionen zu realisieren. Beispielsweise kann eine teleoperierte Steuerung realisiert werden, so dass eine Möglichkeit zur feinfühligen Bedienung eines außerhalb des direkten Sichtbereichs operierenden Fahrzeugs möglich ist. Ein autonomes Folgen ist ebenso denkbar, also die Möglichkeit, autonom einen definierten Abstand zu einem Trackingobjekt zu halten. Dies kann insbesondere auch bei Kurvenfahrten, Beschleunigungen und Bremsvorgängen des Trackingobjekts realisiert werden. Schließlich sei als Beispiel noch eine sogenannte Wegpunktnavigation genannt, das bedeutet, das Fahrzeug kann autonom beispielsweise in GPS-Koordinaten angegebene Wegpunkte gemäß der Auswahl eines Bedieners abfahren, wobei Kollisionen mit auftauchenden Hindernissen vermieden werden können und Ausweichmanöver eingeleitet werden können. Derartige autonome Fähigkeiten bzw. Funktionen werden dabei üblicherweise durch Zusammenwirken mehrerer Algorithmen realisiert, die im vorliegenden Verfahren modular durch Computerprogramme verwirklicht sind, so dass beispielsweise Unterfunktionen, die von verschiedenen übergeordneten Funktionen benötigt werden, gemeinsam genutzt werden können und dergleichen. Ein Beispiel für eine solche Unterfunktion ist die Selbstlokalisation. Algorithmen zum autonomen Betrieb von Kraftfahrzeugen und sonstigen Fahrzeugen, beispielsweise zur Realisierung der beispielhaft genannten Funktionen, sind im Stand der Technik bereits weithin bekannt, so dass sie hier nicht näher dargelegt werden sollen.

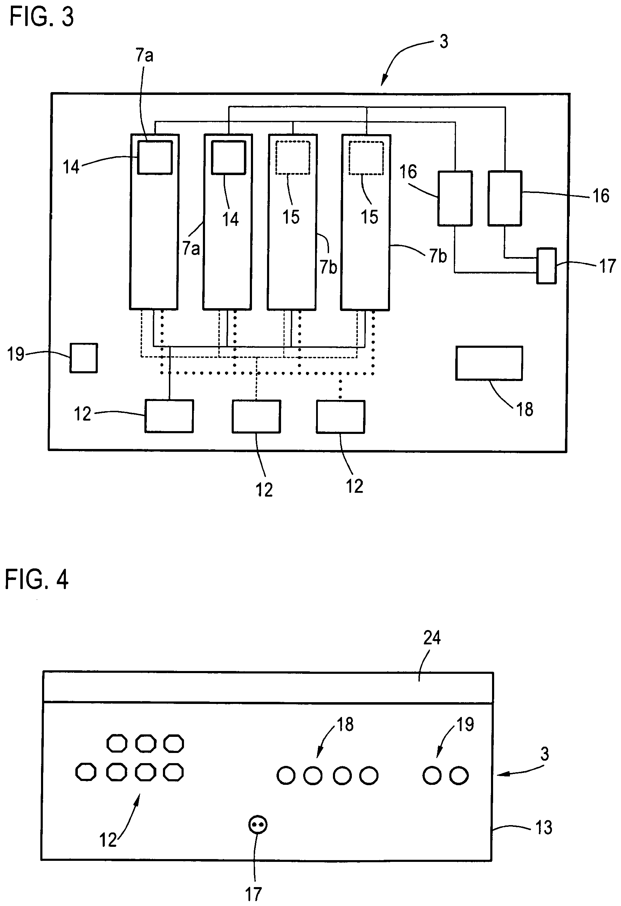

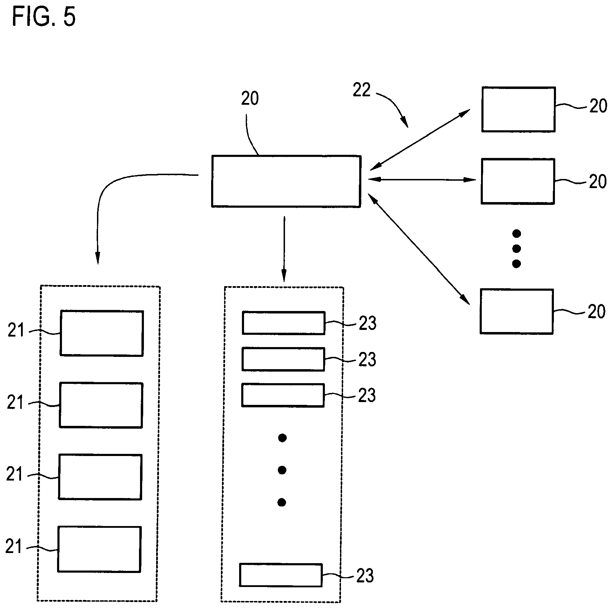

Fig. 2 zeigt in Form einer stark vereinfachten Prinzipskizze die Grundstruktur einer erfindungsgemäßen Steuereinrichtung 6. Sie umfasst, wie bereits erwähnt, die Baueinheiten 3, welche im Folgenden mit Bezug auf Fig. 3 und Fig. 4 noch näher erläutert werden und Recheneinheiten 7a, 7b enthalten. Die Recheneinheiten 7a, 7b aller Baueinheiten 3 bilden zusammen ein dezentrales System zur verteilten Ausführung miteinander kommunizierender Computerprogramme, wobei über den vorgesehen Satz von Computerprogrammen die autonomen Fähigkeiten realisiert werden können. Zur Kommunikation zwischen den Computerprogrammen dient dabei eine Middleware. Auf die genaue Funktion der Recheneinheiten, insbesondere in Bezug auf die Computerprogramme, wird mit Bezug auf Fig. 5 näher eingegangen werden.

Grundlage, um autonome Funktionen durchführen zu können, sind die Sensoren 2, die als Sensordaten Informationen über die Umgebung des Fahrzeugs 1 an die Computerprogramme auf den Recheneinheiten 7a, 7b liefern, welche diese auswerten und hieraus Steuerinformationen zur wenigstens teilweise autonomen Steuerung des Fahrzeugs 1 generieren, welche dann, wie bereits erwähnt, an ein Drive-By-Wire-System 8, das in dem Fahrzeug 1 bereits vorhanden ist, gegeben werden. Dabei weisen vorliegend die beiden Baueinheiten 3 jeweils eine getrennte Kommunikationsverbindung zu dem Drive-By-Wire-System 8 auf.

Es sei an dieser Stelle angemerkt, dass ein solches Drive-By-Wire-System 8 auch über eines der im Folgenden noch angesprochenen Kommunikationsnetzwerke angesprochen werden kann oder gar anzusteuernde Komponenten des Fahrzeugs 1, insbesondere Aktuatoren, wie beispielsweise ein Motor und/oder ein Roboterarm, direkt angesprochen werden können, was auch über eines der im Folgenden noch zu diskutierenden zweiten Kommunikationsnetzwerke denkbar ist.

Um ein dezentrales System zur Ausführung von Computerprogrammen zu bilden, ist eine Kommunikation der Recheneinheiten 7a, 7b der Baueinheiten 3 notwendig. Diese Kommunikation zwischen den Recheneinheiten 7a, 7b ist vorliegend durch ein erstes Kommunikationsnetzwerk 9 realisiert, welches auch als Middleware-Netzwerk bezeichnet werden kann. Dabei handelt es sich vorliegend um ein 1 GBit-Ethernet, wobei auch andere Ausgestaltungen, beispielsweise als ein BUS-Netzwerk denkbar sind.

Ferner ist es notwendig, dass die Daten aller Sensoren 2, von denen üblicherweise selbstverständlich mehr als die beispielhaft dargestellten zwei Sensoren 2 vorgesehen sind, an allen Recheneinheiten 7a, 7b für die Computerprogramme vorliegen müssen. Hierfür sind vorliegend zwei zweite Kommunikationsnetzwerke 10a, 10b vorgesehen, wobei eine vollständige redundante Ausführung gegeben ist, das bedeutet, alle Sensoren 2 sind an beide Kommunikationsnetzwerke 10a, 10b, die auch als Sensordaten-Netzwerke bezeichnet werden können, angeschlossen. Denkbar ist es selbstverständlich auch, jeweils bestimmte Gruppen von Sensoren einem der zweiten Kommunikationsnetzwerke 10a, 10b zuzuordnen. Die Kommunikationsnetzwerke 10a, 10b sind wie das erste Kommunikationsnetzwerk 9 als 1 GBit-Ethernet ausgebildet. Es ist jedoch auch denkbar, hier BUS-Netzwerke zu verwenden, oder die zweiten Kommunikationsnetzwerke 10a, 10b unterschiedlich auszubilden.

Um ihre Daten über die zweiten Kommunikationsnetzwerke 10a, 10b für die Recheneinheiten 7a, 7b auslesbar zu übertragen, weisen die Sensoren 2 eine Signalwandlereinrichtung 11 auf, die zur Umwandlung gemessener Sensordaten in über das Kommunikationsnetzwerk übertragbare Sensordaten ausgebildet ist, sofern die Sensoren ihre Daten nicht bereits in geeigneter Weise selber den zweiten Kommunikationsnetzwerken 10a, 10b zur Verfügung stellen können.

Alle Kommunikationsnetzwerke 9, 10a und 10b sind kabelgebunden ausgebildet, wobei die Verkabelung, wie aus Fig. 2 deutlich ersichtlich ist, dezentral geführt ist, mithin keinen zentralen Knoten bildet. Hierfür sind die Kabel in unterschiedlichen Kabelkanälen geführt und es sind unterschiedliche Wege für die Kabel der verschiedenen Kommunikationsnetzwerke 9, 10a und 10b vorgesehen. Zum Anschluss der Recheneinheiten 7a, 7b an die Kommunikationsnetzwerke 9, 10a, 10b weist vorliegend jede Baueinheit 3 für die in ihr enthaltenen Recheneinheiten 7a, 7b gemeinsame Anschlüsse 12 auf.

Wird nun das erste Kommunikationsnetzwerk 9 beschädigt, fällt es aus oder ist es überlastet, so erkennen dies die Recheneinheiten 7a, 7b und es wird zur Kommunikation der Recheneinheiten 7a, 7b untereinander wenigstens teilweise wenigstens ein zweites Kommunikationsnetzwerk 10a, 10b genutzt. Das bedeutet also, dass selbst bei einer Beschädigung des ersten Kommunikationsnetzwerks 9 noch eine Kommunikation der Computerprogramme untereinander mittels der Middleware, zumindest teilweise, möglich ist, indem die zweiten Kommunikationsnetzwerke 10a, 10b mitgenutzt werden. Würde dies zu einer Überlastung der zweiten Kommunikationsnetzwerke 10a, 10b führen, so kann eine Prioritätenliste, die beispielsweise in Speichereinrichtungen der Recheneinheiten 7a, 7b abgelegt sein kann, genutzt werden, um eine Priorisierung von Kommunikationspartnern und Nachrichten zur Reduzierung des Datenaufkommens zu erlauben. Das bedeutet beispielsweise, dass einige unkritische Funktionen (mithin Computerprogramme) deaktiviert werden, während wichtige Funktionalitäten weiterhin zur Verfügung stehen.

Fig. 3 zeigt den Aufbau der Baueinheiten 3 näher. Innerhalb eines gemeinsamen Gehäuses 13 sind dabei vier Recheneinheiten 7a, 7b, hier Computer, angeordnet. Zwei dieser Recheneinheiten 7a, 7b sind Master-Recheneinheiten 7a, zwei weitere dieser Recheneinheiten sind Slave-Recheneinheiten 7b. Die Master-Recheneinheiten 7a umfassen dabei als Speichereinrichtung 14 eine bootfähige Festplatte, beispielsweise eine SSD, so dass sie mithin in der Lage sind, selbst zu booten. Die Slave-Recheneinheiten 7b umfassen nur einen flüchtigen Speicher 15 (RAM), so dass diese nach dem Booten der Master-Recheneinheiten 7a mit einem Betriebssystem und dem Satz von Computerprogrammen versehen werden. Auf diese Weise ist jede Recheneinheit 7a, 7b zur Durchführung jedes Computerprogramms des Satzes von Computerprogrammen ausgebildet, das bedeutet, jedes Computerprogramm liegt auf jeder Recheneinheit 7a, 7b vor. Dabei sei an dieser Stelle angemerkt, dass es durchaus denkbar ist, dass auch die Slave-Recheneinheiten 7b eine nicht flüchtige Speichereinrichtung umfassen, auf der wenigstens die Computerprogramme abgelegt sind.

Es sei an dieser Stelle noch angemerkt, dass, abgesehen von der Bootfähigkeit, die Recheneinrichtungen, was ihre Rechenleistung und sonstige Ausstattung angeht, identisch ausgeführt sind, das bedeutet, jede Recheneinrichtung 7a, 7b ist bezüglich der Computerprogramme mit derselben Leistungsfähigkeit versehen, was die dynamische Zuweisung von Computerprogrammen und die gesamte Systemarchitektur vereinfacht.

Die Baueinheit 3 umfasst ferner zwei Stromversorgungen 16, wobei an jede der Stromversorgungen 16 jeweils eine Master-Recheneinheit 7a und eine Slave-Recheneinheit 7b angeschlossen sind. Sollte also eine der Stromversorgungen 16 ausfallen, so verbleibt immer noch die Hälfte der Rechenleistung. Möglich ist es natürlich auch, in einer anderen Ausgestaltung die Stromversorgung 16 vollständig redundant auszugestalten, so dass alle Recheneinheiten 7a, 7b einer Baueinheit 3 durch die Stromversorgung 16 versorgt werden können. Bei beiden Stromversorgungen 16 handelt es sich vorliegend um Spannungswandlungseinrichtungen, die über einen gemeinsamen Anschluss 17 der Baueinheit 3, vgl. Fig. 4, versorgt werden.

Jede Baueinheit 3 ist ferner mit Anschlüssen für weitere Kommunikationsverbindungen, beispielsweise bezüglich nicht mit Signalwandlereinrichtungen 11 versehener Sensoren 2, versehen. Vorliegend sind RS232-Schnittstellen 18 und CAN-BUS-Anschlüsse 19 vorgesehen. Die gemeinsamen Anschlüsse der Baueinheit 3 sind auch in der in Fig. 4 dargestellten Rückansicht zu entnehmen. Dort ist auch zu erkennen, dass das Gehäuse 13 der Baueinheit 3 einen Deckel 24 aufweist, über den Zugang zu den innerhalb des Gehäuses befindlichen Komponenten erhalten werden kann. Es sei noch angemerkt, dass für die Steckverbindungen grundsätzlich MIL-Stecker verwendet werden.

Wie bereits erwähnt, besteht die Software aus einem Satz von Computerprogrammen, die vorliegend insbesondere auch definierte Schnittstellen zum Datenaustausch aufweisen, so dass zum einen eine problemlose Kommunikation der Computerprogramme untereinander möglich ist, es zum anderen jedoch auch problemlos möglich ist, einzelne Computerprogramme (Softwaremodule) nachzurüsten oder auszutauschen. Beim Nachrüsten bzw. beim Austauschen von Sensoren kann für diese Sensoren ein spezifisches Computerprogramm zum Auslesen der Sensordaten erstellt werden, das diese Daten dann im Standardformat den anderen Computerprogrammen mitteilt.

Die Software ist also modular aufgebaut und kommuniziert im vorliegenden Fall über eine Middleware. Sie setzt sich aus diversen einzelnen Computerprogrammen zusammen, die beim jeweiligen Start durch Datenabruf über die Middleware oder auch durch die noch näher zu diskutierenden Konfigurationsdateien die notwendigen Informationen erhalten, um die aktuelle Plattform des Fahrzeugs 1 voll nutzen zu können. Dies sei nun im Hinblick auf Fig. 5 näher erläutert.

Nach dem Booten der entsprechenden Recheneinheit 7a, 7b wird zunächst ein Master-Computerprogramm 20 auf jeder Recheneinheit 7a, 7b gestartet, welches auch als Haupt-Softwaremodul bezeichnet werden kann. Dieses Master-Computerprogramm liest nun aus verschiedenen Konfigurationsdateien 21 (wobei auch eine Realisierung denkbar ist, in der nur eine einzige Konfigurationsdatei 21 vorliegt) diverse Informationen ein. Die Konfigurationsdateien 21 sind dabei vorliegend als XML-Dateien ausgebildet. Vorliegend ist eine Konfigurationsdatei 21 für die Steuereinrichtung 6 selbst vorgesehen, eine weitere Konfigurationsdatei 21 enthält Informationen über die Plattform (Kommunikationsschnittstelle, verfügbare Plattformdaten, Latenzen, Abmessungen der Plattform, dynamische und statische Grenzen der Plattform, usw.). Eine dritte Konfigurationsdatei 21 enthält die Beschreibung der vorhandenen Sensoren 2, beispielsweise deren Typ, Kommunikationsschnittstelle, Einbauposition und dergleichen. Schließlich ist noch eine Konfigurationsdatei 21 zur Beschreibung der vorhandenen Computerprogramme vorgesehen, in der jedes Computerprogramm, das in dem Satz von Computerprogrammen enthalten ist, registriert ist.

Das Master-Computerprogramm 20 kommuniziert nun, vgl. Pfeile 22, mit den übrigen Master-Computerprogrammen und stimmt mit diesen ab, auf welcher Recheneinheit 7a, 7b welches Computerprogramm laufen soll, um eine gleichmäßige Auslastung der CPUs zu gewährleisten und auf eventuelle Hardwareausfälle direkt reagieren zu können. Die einzelnen zu startenden Computerprogramme werden den verschiedenen Recheneinheiten 7a, 7b zugewiesen, wobei eine Standardverteilung bei voll funktionsfähiger Steuereinrichtung 6 bereits in der Konfigurationsdatei 21 definiert ist.

Stellt nun ein Master-Computerprogramm 20 fest, dass ein weiteres Computerprogramm, ein Sensor 2 oder eine Recheneinheit 7a, 7b ausgefallen ist, so findet eine erneute Abstimmung zwischen den Master-Computerprogrammen 20 statt, um auf den Fehlerfall reagieren zu können, wobei eine neue Zuweisung von Computerprogrammen auf die noch vorhandenen Ressourcen, das heißt Recheneinheiten 7a, 7b, und/oder auch eine gezielte Abschaltung von einzelnen, nicht mehr funktionierenden oder benötigten Computerprogrammen erfolgen kann. Dabei kann vorgesehen sein, dass in den Konfigurationsdateien 21 für diesen Fall eine Prioritätenliste vorgesehen ist, die die Maßnahmen bei Fehlerfällen wenigstens teilweise vorgibt, vorteilhafterweise ist es jedoch auch möglich, dass dann, wenn für eine vorhandene Situation keine Aufteilung von Computerprogrammen auf Recheneinheiten 7a, 7b definiert ist, automatisch eine derartige Aufteilung generiert wird.

Das Master-Computerprogramm 20 startet also, wie beispielhaft durch die Computerprogramme 23 erläutert, bestimmte Computerprogramme, wobei beispielhaft einige Computerprogramme 23 in Fig. 5 dargestellt sind, es überwacht diese Computerprogramme 23 jedoch auch im Rahmen einer Watchdog-Funktionalität hinsichtlich ihres Verhaltens. Dabei kann das Master-Computerprogramm 20 beispielsweise Computerprogramme 23 abschalten, neu starten oder mit anderen Parametern, beispielsweise einer niedrigeren Update-Rate, laufen lassen.

Mithin ist ein komplett dezentrales Design mit einer Middleware ohne zentrales Element gegeben, wobei es zudem keine kritischen Computerprogramme gibt, sondern alle Computerprogramme dezentral mehrfach gelagert werden und auf verschiedenen Recheneinheiten 7a, 7b gestartet werden können. Alle Sensoren 2 können von allen Recheneinheiten 7a, 7b aus angesprochen und ausgelesen werden. Durch die Konfigurationsdateien 21 kann die Software flexibel parametrisiert werden. Durch den komplett dezentralen Aufbau der Software und die Definition der Computerprogramme in den Konfigurationsdateien 21 können einzelne Computerprogramme flexibel bei Bedarf ausgetauscht und ergänzt werden, ohne dass Änderungen am Gesamtsystem erforderlich sind. Zudem können, da alle Sensoren 2 direkt bzw. indirekt via Ethernet mit den Recheneinheiten 7a, 7b kommunizieren und die Kommunikation in den Konfigurationsdateien 21 festgelegt ist, die Sensoren 2 bei Bedarf einfach getauscht, ersetzt und erweitert werden, ohne dass eine komplexe Anpassung der Computerprogramme erforderlich ist. Nur in den Konfigurationsdateien 21 muss eine Anpassung vorgenommen werden.

Dabei sei an dieser Stelle noch darauf hingewiesen, dass auch Funktionen (in Form von Computerprogrammen) parallel betrieben werden können, die über ähnliche Eigenschaften verfügen und jeweils über eine identische Datenschnittstelle Informationen liefern. Hierdurch wird auch eine größere Robustheit erreicht, wenn beispielsweise zwei parallel arbeitende Selbstlokalisationsalgorithmen vorgesehen sind, welche unterschiedliche Sensoren 2 für die Positionsbestimmung umfassen, um gegen plötzliche Störungen an einem der Sensoren 2 gefeit zu sein. Zudem ist es möglich, durch vergleichende Bewertung der Informationen der unterschiedlichen Computerprogramme die Qualität der Informationen zu erhöhen. Schließlich ist es denkbar, dass sich die Informationen, die mit einem der Selbstlokalisationsalgorithmen gewonnen werden, eher für bestimmte übergeordnete Funktionen eignen als Informationen anderer Selbstlokalisationsalgorithmen.

## Patentansprüche

1. Steuereinrichtung (6) zum wenigstens teilweise autonomen Betrieb eines militärischen Fahrzeugs (1), umfassend
- wenigstens zwei Recheneinheiten (7a, 7b), die ein dezentrales System zur verteilten Ausführung miteinander kommunizierender Algorithmen (20, 23) bilden,
- wenigstens ein erstes kabelgebundenes Kommunikationsnetzwerk (9) zur Kommunikation der Recheneinheiten (7a, 7b) untereinander im Rahmen einer Middleware-Umgebung,
- wenigstens ein zweites, kabelgebundenes Kommunikationsnetzwerk (10a, 10b) zur Kommunikation jeder der Recheneinheiten (7a, 7b) mit wenigstens einem Sensor (2),
wobei die Recheneinheiten (7a, 7b) zur Nutzung des zweiten Kommunikationsnetzwerks (10a, 10b) zur Kommunikation untereinander bei einem Ausfall und/oder einer Überlastung des ersten Kommunikationsnetzwerks (9) ausgebildet sind,
**dadurch gekennzeichnet, dass** ein kompletter Satz aller Algorithmen (20, 23) auf allen Recheneinheiten (7a, 7b) vorhanden und/oder in diese einladbar ist, wobei jede Recheneinheit (7a, 7b) zum Ausführen eines Masteralgorithmus (20) zur Koordinierung der Ausführung der übrigen Algorithmen (23) nach dem Booten ausgebildet ist,
dass der Masteralgorithmus (20) Informationen zur Ausführung der Algorithmen (23) aus wenigstens einer auf jeder Recheneinheit (7a, 7b) vorliegenden Konfigurationsdatei (21) ausliest und/oder von wenigstens einem anderen Masteralgorithmus (20) über die Middleware erhält, und
dass die Recheneinheiten (7a, 7b) wenigstens eine selbst bootfähige Master-Recheneinheit (7a) und wenigstens eine über ein Kommunikationsnetzwerk (9, 10a, 10b) mittels einer gebooteten Master-Recheneinheit (7a) bootfähige Slave-Recheneinheit (7b) umfassen.

2. Steuereinrichtung nach Anspruch 1,
wobei wenigstens ein Kommunikationsnetzwerk (9, 10a, 10b) als ein sternförmiges Netzwerk, insbesondere ein Ethernet-Netzwerk, und/oder wenigstens ein Kommunikationsnetzwerk (9, 10a, 10b) als ein Bus-Netzwerk ausgebildet ist.

3. Steuereinrichtung nach Anspruch 1 oder 2,
wobei an das zweite Kommunikationsnetzwerk (10a, 10b) angeschlossene Sensoren (2) eine Signalwandlereinrichtung (11) zur Umwandlung gemessener Sensordaten in über das Kommunikationsnetzwerk (10a, 10b) übertragbare Sensordaten umfasst.

4. Steuereinrichtung nach einem der vorangehenden Ansprüche,
wobei sie bei einer Kommunikation zwischen Recheneinheiten (7a, 7b) über das zweite Kommunikationsnetzwerk (10a, 10b) zu einer Priorisierung von Kommunikationspartnern und/oder Nachrichten zur Reduzierung des Datenaufkommens ausgebildet ist.

5. Steuereinrichtung nach einem der vorangehenden Ansprüche,
wobei wenigstens zwei zweite Kommunikationsnetzwerke (10a, 10b) vorgesehen sind.

6. Steuereinrichtung nach einem der vorangehenden Ansprüche,
wobei jede Recheneinheit (7a, 7b) zur Durchführung jedes Algorithmus (20, 23) ausgebildet ist, wobei die Recheneinheiten (7a, 7b) bei einer Nichtdurchführbarkeit einer insbesondere als Datei vorliegenden Standardverteilung von durchzuführenden Algorithmen (20, 23) auf Recheneinheiten (7a, 7b), insbesondere aufgrund eines Ausfalls wenigstens einer Recheneinheit (7a, 7b), zur Neuzuordnung wenigstens eines insbesondere anhand einer Prioritätenliste ausgewählten Teils der durchzuführenden Algorithmen (20, 23) zu Recheneinheiten (7a, 7b) ausgebildet sind.

7. Steuereinrichtung nach einem der vorangehenden Ansprüche,
wobei wenigstens ein Teil der Algorithmen (20, 23) eine festgelegte Datenschnittstelle aufweisen und/oder wenigstens ein Algorithmus (20, 23) zur Umwandlung von Daten eines bestimmten Sensors (2) in ein für die festgelegte Datenschnittstelle geeignetes Format vorgesehen ist.

8. Steuereinrichtung nach einem der vorangehenden Ansprüche,
wobei wenigstens zwei Stromversorgungen (17) für die Recheneinheiten (7a, 7b) vorgesehen sind, wobei insbesondere bei wenigstens zwei Master-Recheneinheiten (7a) wenigstens zwei unterschiedlichen Master-Recheneinheiten (7a) unterschiedliche und/oder wenigstens zwei Stromversorgungen (16) zugeordnet sind.

9. Steuereinrichtung nach einem der vorangehenden Ansprüche,
wobei wenigstens zwei Baueinheiten (3) mit wenigstens einer Recheneinheit (7a, 7b), insbesondere wenigstens einer Master-Recheneinheit (7a), vorgesehen sind, welche insbesondere voneinander beabstandet, bevorzugt um wenigstens 50 cm beabstandet, in dem Fahrzeug (1) angeordnet sind.

10. Steuereinrichtung nach einem der vorangehenden Ansprüche,
wobei die Verkabelung unterschiedlicher Kommunikationsnetzwerke (9, 10a, 10b) voneinander beabstandet, insbesondere in unterschiedlichen Kabelkanälen und/oder auf unterschiedlichen Verkabelungswegen, durch das Fahrzeug (1) geführt ist.

11. Steuereinrichtung nach einem der vorangehenden Ansprüche,
wobei sie wenigstens einen Steueranschluss an ein Drive-By-Wire-System (8) des Fahrzeugs (1) umfasst, wobei jede Recheneinrichtung (7a, 7b) Zugriff auf den oder wenigstens einen Steueranschluss hat.

12. Militärisches Fahrzeug (1), umfassend eine Steuereinrichtung (6) nach einem der vorangehenden Ansprüche.

## Claims

1. Control device (6) for the at least partially autonomous operation of a military vehicle (1), comprising
- at least two computing units (7a, 7b) which form a decentralized system for the distributed execution of algorithms (20, 23) communicating with one another,
- at least one first wired communication network (9) for the communication between the computing units (7a, 7b) within the scope of a middleware environment,
- at least one second wired communication network (10a, 10b) for the communication between each of the computing units (7a, 7b) and at least one sensor (2),
wherein the computing units (7a, 7b) are designed to use the second communication network (10a, 10b) for communication between one another if the first communication network (9) fails and/or is overloaded,
**characterized in that**
a complete set of all algorithms (20, 23) is present on all computing units (7a, 7b) and/or can be loaded into said computing units, wherein each computing unit (7a, 7b) is designed to execute a master algorithm (20) for the purpose of coordinating the execution of the remaining algorithms (23) after booting,
**in that** the master algorithm (20) reads information for executing the algorithms (23) from at least one configuration file (21) present on each computing unit (7a, 7b) and/or receives it from at least one other master algorithm (20) via the middleware, and **in that** the computing units (7a, 7b) comprise at least one self-bootable master computing unit (7a) and at least one slave computing unit (7b) which is bootable via a communication network (9, 10a, 10b) by means of a booted master computing unit (7a).

2. Control device according to Claim 1,
wherein at least one communication network (9, 10a, 10b) is in the form of a star-type network, in particular an Ethernet network, and/or at least one communication network (9, 10a, 10b) is in the form of a bus network.

3. Control device according to Claim 1 or 2,
wherein sensors (2) connected to the second communication network (10a, 10b) comprise a signal converter device (11) for converting measured sensor data into sensor data which can be transmitted via the communication network (10a, 10b).

4. Control device according to one of the preceding claims,
wherein, during communication between computing units (7a, 7b) via the second communication network (10a, 10b), the control device is designed to prioritize communication partners and/or messages in order to reduce the data volume.

5. Control device according to one of the preceding claims,
wherein at least two second communication networks (10a, 10b) are provided.

6. Control device according to one of the preceding claims,
wherein each computing unit (7a, 7b) is designed to perform each algorithm (20, 23), wherein, if a standard distribution of algorithms (20, 23) to be performed which is present as a file, in particular, cannot be performed on computing units (7a, 7b), in particular on account of failure of at least one computing unit (7a, 7b), the computing units (7a, 7b) are designed to reassign at least some of the algorithms (20, 23) to be performed, which are selected on the basis of a priority list in particular, to computing units (7a, 7b).

7. Control device according to one of the preceding claims,
wherein at least some of the algorithms (20, 23) have a defined data interface and/or at least one algorithm (20, 23) is provided for the purpose of converting data from a particular sensor (2) into a format suitable for the defined data interface.

8. Control device according to one of the preceding claims,
wherein at least two power supplies (17) are provided for the computing units (7a, 7b), wherein, in particular in the case of at least two master computing units (7a), different and/or at least two power supplies (16) are assigned to at least two different master computing units (7a).

9. Control device according to one of the preceding claims,
wherein at least two structural units (3) having at least one computing unit (7a, 7b), in particular at least one master computing unit (7a), are provided and, in particular, are arranged at a distance from one another, preferably by at least 50 cm, in the vehicle (1).

10. Control device according to one of the preceding claims,
wherein the cabling of different communication networks (9, 10a, 10b) is routed through the vehicle (1) at a distance from one another, in particular in different cable ducts and/or on different cable routes.

11. Control device according to one of the preceding claims,
wherein the control device comprises at least one control connection to a drive-by-wire system (8) of the vehicle (1), wherein each computing device (7a, 7b) has access to the control connection or to at least one control connection.

12. Military vehicle (1) comprising a control device (6) according to one of the preceding claims.

## Revendications

1. Dispositif de commande (6) destiné au fonctionnement au moins partiellement autonome d'un véhicule militaire (1), comprenant
- au moins deux unités de calcul (7a, 7b) qui forment un système décentralisé servant à l'exécution distribuée d'algorithmes (20, 23) qui communiquent entre eux,
- au moins un premier réseau de communication (9) filaire servant à la communication des unités de calcul (7a, 7b) entre elles dans le cadre d'un environnement intergiciel,
- au moins un deuxième réseau de communication (10a, 10b) filaire servant à la communication de chacune des unités de calcul (7a, 7b) avec au moins un capteur (2), les unités de calcul (7a, 7b) étant configurées pour utiliser le deuxième réseau de communication (10a, 10b) pour la communication entre elles dans le cas d'une panne et/ou d'une surcharge du premier réseau de communication (9),
**caractérisé en ce que**
un jeu complet de tous les algorithmes (20, 23) est présent sur toutes les unités de calcul (7a, 7b) et/ou peut être chargé dans celles-ci, chaque unité de calcul (7a, 7b) étant configurée pour exécuter un algorithme maître (20) servant à la coordination de l'exécution des algorithmes restants (23) après le démarrage,
**en ce que** l'algorithme maître (20) lit des informations servant à l'exécution des algorithmes (23) à partir d'au moins un fichier de configuration (21) présent sur chaque unité de calcul (7a, 7b) et/ou en obtient de la part d'au moins un autre algorithme maître (20) par le biais de l'intergiciel, et
**en ce que** les unités de calcul (7a, 7b) comprennent au moins une unité de calcul maître (7a) pouvant démarrer elle-même et au moins une unité de calcul esclave (7b) qui peut démarrer par le biais d'un réseau de communication (9, 10a, 10b) au moyen d'une unité de calcul maître (7a) ayant démarré.

2. Dispositif de commande selon la revendication 1, au moins un réseau de communication (9, 10a, 10b) étant réalisé sous la forme d'un réseau en étoile, notamment un réseau Ethernet, et/ou au moins un réseau de communication (9, 10a, 10b) étant réalisé sous la forme d'un réseau à bus.

3. Dispositif de commande selon la revendication 1 ou 2, des capteurs (2) raccordés au deuxième réseau de communication (10a, 10b) comprenant un dispositif convertisseur de signal (11) destiné à convertir les données de capteur mesurées en données de capteurs transmissibles par le biais du réseau de communication (10a, 10b).

4. Dispositif de commande selon l'une des revendications précédentes, celui-ci étant configuré pour, dans le cas d'une communication entre les unités de calcul (7a, 7b) par le biais du deuxième réseau de communication (10a, 10b), définir une priorité des partenaires de communication et/ou des messages en vue de réduire le volume de données.

5. Dispositif de commande selon l'une des revendications précédentes, au moins deux deuxièmes réseaux de communication (10a, 10b) étant présents.

6. Dispositif de commande selon l'une des revendications précédentes, chaque unité de calcul (7a, 7b) étant configurée pour exécuter chaque algorithme (20, 23), les unités de calcul (7a, 7b) étant configurées pour, dans le cas d'une impossibilité d'exécution sur les unités de calcul (7a, 7b) d'une distribution standard des algorithmes (20, 23) à exécuter, notamment présente sous la forme d'un fichier, notamment en raison d'une panne d'au moins une unité de calcul (7a, 7b), réaffecter au moins une partie, notamment sélectionnée à l'aide d'une liste de priorités, des algorithmes (20, 23) à exécuter aux unités de calcul (7a, 7b).

7. Dispositif de commande selon l'une des revendications précédentes, au moins une partie des algorithmes (20, 23) possédant une interface de données définie et/ou au moins un algorithme (20, 23) étant prévu pour convertir des données d'un capteur (2) donné en un format approprié pour l'interface de données définie.

8. Dispositif de commande selon l'une des revendications précédentes, au moins deux alimentations électriques (17) étant présentes pour les unités de calcul (7a, 7b), différentes et/ou au moins deux alimentations électriques (16) étant associées à au moins deux unités de calcul maître (7a) différentes, notamment en présence d'au moins deux unités de calcul maître (7a).

9. Dispositif de commande selon l'une des revendications précédentes, au moins deux modules (3) comprenant au moins une unité de calcul (7a, 7b), notamment au moins une unité de calcul maître (7a), étant présents, lesquels sont notamment disposés espacés l'un de l'autre dans le véhicule (1), de préférence d'au moins 50 cm.

10. Dispositif de commande selon l'une des revendications précédentes, le câblage des différents réseaux de communication (9, 10a, 10b) étant guidé de manière mutuellement espacée à travers le véhicule (1), notamment dans des chemins de câbles différents et/ou sur des trajets de câblage différents.

11. Dispositif de commande selon l'une des revendications précédentes, celui-ci comprenant au moins un raccordement de commande au niveau d'un système de commande électrique de conduit (8) du véhicule (1), chaque unité de calcul (7a, 7b) ayant accès au ou à l'au moins un raccordement de commande.

12. Véhicule militaire (1), comprenant un dispositif de commande (6) selon l'une des revendications précédentes.
